# EUROPEAN PATENT SPECIFICATION

(11) **EP 2 856 394 B1**
(45) Date of publication and mention of the grant of the patent: **07.03.2018**
(21) Application number: 13739799.8
(22) Date of filing: 04.06.2013
(51) Int. Cl.: G06Q 10/00

(54) **DEVICE, SYSTEM AND METHOD FOR MAKING COMMERCIAL TRANSACTIONS THROUGH A PAPER DOCUMENT**
VORRICHTUNG, SYSTEM UND VERFAHREN ZUR DURCHFÜHRUNG GESCHÄFTLICHER TRANSAKTIONEN MITHILFE EINES PAPIERDOKUMENTS
DISPOSITIF, SYSTÈME ET PROCÉDÉ DE RÉALISATION DE TRANSACTIONS COMMERCIALES À TRAVERS UN DOCUMENT PAPIER

(30) Priority: 05.06.2012 IT TO20120489
(43) Date of publication of application: 08.04.2015
(73) Proprietor: PANINI S.p.A., 10124 Torino (IT)
(72) Inventor: FASSIOTTO, Marco, I-11020 Issime (AO) (IT); ZANOTEL, Mirko, I-10154 Torino (TO) (IT)
(74) Representative: Camolese, Marco
(86) International application number: PCT/IB2013/054579
(87) International publication number: WO 2013/182976

(56) References cited:
- EP-A2- 0 991 227
- WO-A1-2007/091057
- GB-A- 2 415 519
- JP-A- 2000 293 332
- US-A1- 2004 083 119
- US-A1- 2006 064 744
- US-A1- 2007 024 900
- US-B1- 6 429 952

## Description

The present invention relates to a device, a system and a method for making commercial transactions.

More in particular, the present invention relates to a device, a system and a method for making commercial transactions through a paper document, which involve scanning an image of a document, e.g. a cheque, reading a magnetic codeline, e.g. a MICR ("Magnetic Ink Character Recognition") code, and making prints or endorsements on the treated document or cheque.

Nowadays, payments are increasingly made through electronic transactions. Shops, supermarkets, gas stations, medical consulting rooms, and offices of various kinds have POS terminals that accept credit cards, which allow people to pay for purchased goods and services. Those users who have an "Internet banking" platform available can also make payments, bank transfers and other banking operations through a personal computer (PC), a mobile telephone, a smartphone and other similar user devices.

In addition to the above-mentioned electronic transactions, there are also electronic transactions of a different type which are related to paper documents, such as cheques, luncheon vouchers, invoices and, in general, paper documents of any kind containing information adapted to generate a commercial transaction.

Devices are known, e.g. the "I:Deal" and "wI:Deal" products marketed by the present Applicant, which can automatically read essential information contained in a document, such as, for example, the front and back images and the MICR code of a cheque.

The operation of such devices can be summarized as follows:
a) turning on the device and making it ready to accept commands;
b) possibly changing its default behaviour;
c) indicating to the device that it must get ready to accept documents;
d) providing the device with a document to be scanned;
e) taking data from the document (e.g. image and MICR code);
f) either returning to step d) for another document or ending the procedure.

These devices require a specific configuration and a physical connection to a computer associated therewith for driving the device and then treating the document data; therefore, they are essentially only used at banks, small companies, professional firms , offices and cash-desks. Document WO 2007/091057 discloses value based tokens which are generated for inclusion on a data carrier which may be applied to a cheque or similar document. The tokens are generated by a core system, which communicates with application specific wrappers. The wrappers supply token parameters to the core that are specific to the application and the core generates the tokens, and stores them for later authentication. The core then encodes the tokens onto a data carrier under the control of the wrapper and distributes the tokens under the control of the wrapper. The tokens are encoded onto the cheque when it is printed. When a cheque is presented for authentication, for example at a bank, the signed cheque is imaged and the token retrieved from the encoded data carrier. It is passed back to the core by the wrapper for authentication of its identification number and other parameters. The data stored on the carrier references cheque information stored at a database which is compared with cheque information retrieved from the cheque.

Document EP 0 991 227 discloses an interactive networked client-server scan method launched and actively managed through a web browser interface on a client. A server of the method responds to a universal resource locator address identifying the server with a general purpose format software program that creates an interface in the client web browser and enables the client to interact with the server in initiating, altering and monitoring scan jobs and related data.

Payment systems are known in the art which involve personal devices which are often owned by the user, such as smartphones, tablets and mobile telephones. However, such payment systems are used for purely electronic commercial transactions, not for commercial transactions involving the use of paper documents, in which case they could with difficulty capture the image, but could not read and decode the MICR codeline that represents one of the very few real security features of a cheque.

Moreover, such devices belonging to a user are of heterogeneous types and support different operating systems and hardware configurations, so that it is unthinkable to create a single software application that embraces all these devices and allows making economical transactions through paper documents.

It is therefore one object of the present invention to provide a device, a system and a method for making commercial transactions through a paper document by means of a user device, in particular a POS terminal, a computer, a mobile telephone, a smartphone or a tablet.

It is a further object of the present invention to provide a device, a system and a method for making commercial transactions through a paper document in real time.

It is a further object of the present invention to provide a method for making commercial transactions through a paper document which can be carried out by innumerable users.

It is yet another object of the present invention to provide a method for making commercial transactions through a paper document which can be carried out in mobility.

These and other objects of the invention are achieved through a device, a system and a method for making commercial transactions through a paper document as claimed in the appended claims, which are intended to be an integral part of the present description.

In short, the invention springs from the need of controlling a reading and scanning device for making commercial transactions through a paper document by means of a user device (POS terminal, smartphone, mobile telephone, computer, laptop) without having to install special software applications nor any APIs ("Application Program Interface") or libraries in said user devices, or without having to modify the hardware thereof.

According to the invention, the reading and scanning device for making commercial transactions through a paper document receives commands from a user device through the HTTP protocol. By means of three commands only, i.e. POST, GET and SET, the user device can control and exchange data with a software interface of the device for making commercial transactions through a paper document.

The use of the HTTP protocol is advantageous because it is largely independent of the operating system, it is a standard, includes all commands necessary for reading from and writing to a device, and has been conceived for operating in wired or wireless environments. In addition, the HTTP protocol can be implemented on a large number of physical connections, such as wired connections in a LAN network, wired connections using the USB protocol, wireless connections in a WiFi network and wireless connections using the Bluetooth protocol.

In order to drive the device for reading and scanning a paper document, it is therefore sufficient that the user device includes a web browser pointing to an IP address of the reading and scanning device, so that control and data packets can be sent to and received from the latter.

Further features of the invention are set out in the appended claims, which are intended to be an integral part of the present description.

The above objects will become more apparent from the following detailed description of a device, a system and a method for making commercial transactions through a paper document, with particular reference to the annexed drawings, wherein:
- Figure 1 shows a basic diagram of a system 1 for making commercial transactions through a paper document according to the invention;
- Figure 2 shows a block diagram of an electronic board installed in a device for reading and scanning a paper document according to the invention;
- Figure 3 shows an example of a parameter table used for configuring the reading and scanning device according to the invention;
- Figures 4-7 show some typical examples of applications of the system according to the present invention.

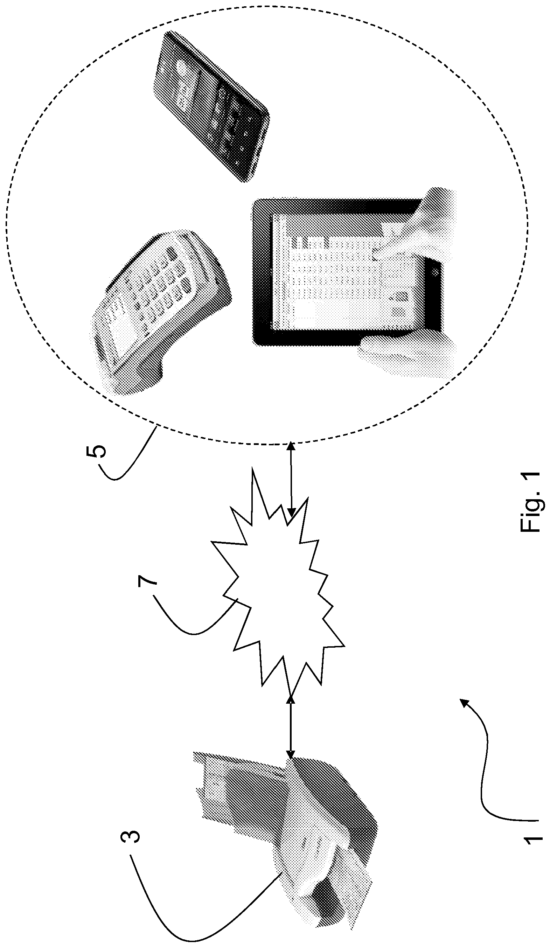

With reference to Fig. 1, there is shown a basic diagram of a system 1 for making commercial transactions through a paper document, which comprises: a device 3 for reading and scanning a paper document containing information useful for a commercial transaction; a user device 5; interface means 7, in particular a connection between the reading and scanning device 3 and the user device 5.

The reading and scanning device 3 comprises means for scanning an image of said paper document. It may also comprise means for reading an optical or magnetic code, e.g. the MICR code of a cheque, and may be capable of making prints or endorsements on the paper document by means of stamps or inkjet or thermal printing systems.

In a preferred embodiment, the reading and scanning device 3 is a document and cheque sorter.

The user device 5 may be any device capable of communicating with the reading and scanning device 3, in particular a smartphone, a mobile telephone, a computer, a POS (Point of Sale) terminal, a tablet or the like.

The connection 7 may be physically established, for example, by means of a USB cable or in wireless mode.

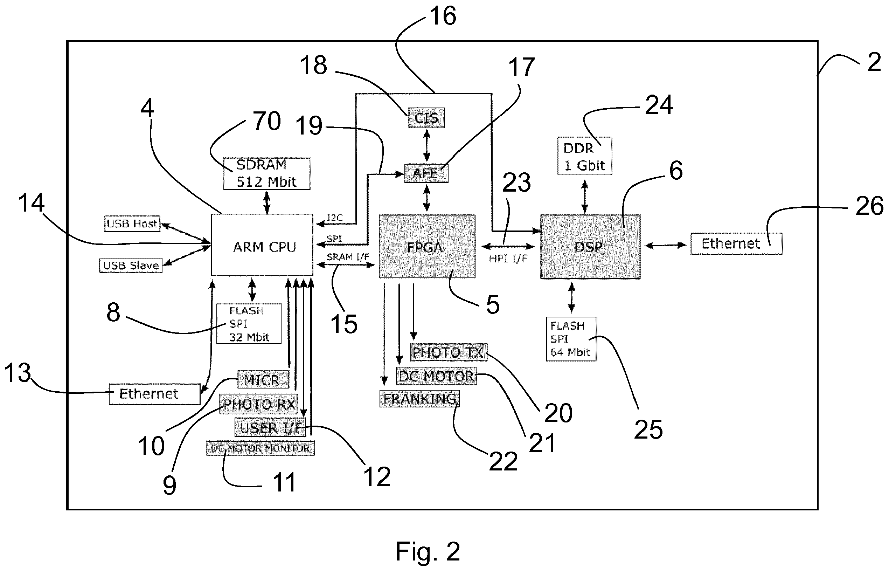

With reference to Fig. 2, there is shown a block diagram of an electronic board 2 installed in a device 3 for reading and scanning a paper document, which comprises a central processing unit 4, or CPU, a programmable digital integrated circuit 5, in particular an FPGA ("Field Programmable Gate Array") circuit, and a digital signal processor 6, or DSP ("Digital Signal Processor").

The central processing unit 4 is connected to a SDRAM ("Synchronous Dynamic Random Access Memory") memory 70 i.e. a synchronous dynamic RAM memory, e.g. having a capacity of 512 Mbit, and to an SPI ("Serial Peripheral Interface") memory 8, i.e. a flash memory that uses a serial interface.

The central processing unit 4 receives data from means 9 adapted to scan an image and from means 10 adapted to scan an optical or magnetic code, in particular a MICR code, and from a circuit 11 for monitoring a motor used for driving the scanning means 9. It is also in bidirectional communication with a user interface 12.

The central processing unit 4 also comprises a port 13 for establishing a connection to an Ethernet network and a port 14 for a USB connector that allows the reading and scanning device 3 to operate as either master or slave, as will be explained in detail below.

The central processing unit 4 exchanges data with the programmable digital integrated circuit 5 through a SRAM I/F bidirectional connection 15 and with the digital signal processor 6 through an I2C ("Inter Integrated Circuit") bus.

An AFE ("Analog Front End") module 17 receives the scanned analog image from a CIS ("Contact Image Sensor") module 18.

The AFE module 17 is connected to the central processing unit 4 via an SPI ("Serial Peripheral Interface") bidirectional connection 19.

The programmable digital integrated circuit 5 sends commands to the image scanning means 20, to the direct-current motor 21 and to a possible printing or stamping device 22.

The digital signal processor 6 is in bidirectional communication with the programmable digital integrated circuit 5 through a Hardware Platform Interface (HPI) 23.

The digital signal processor 6 is connected to a DDR ("Double Data Rate") memory 24, e.g. having a capacity of 1 Gbit, and to an SPI ("Serial Peripheral Interface") flash memory 25, i.e. a flash memory that uses a serial interface.

The digital signal processor 6 also comprises a port 26 for connecting to an Ethernet network.

The device 3 for reading and scanning a paper document can be addressed through an IP address, preferably a configurable one, by a user device 5, which can then control all functions of the reading and scanning device 3 through the HTTP protocol or the HTTPS protocol.

If the reading and scanning device 3 implements an internal web server and a software interface, and the user device 5 includes a browser or a specific application, then the device 3 can transmit to the user device 5 its own internal Web site, which de facto reproduces on the browser of the user device 5 a sequence of Web pages that allow starting a scan, configuring the paper document capture parameters, receiving and displaying on the display of the user device 5 the scanned images of the paper document and possibly the MICR code.

The user device 5 can thus command the following operations:
- configuring the reading and scanning device 3;
- scanning a (front and/or back) image of a paper document fed to the reading and scanning device 3;
- obtaining the results of said scan;
- reading an optical and/or magnetic code through the reading and scanning device 3;
- commanding a printing operation to be executed by a stamp or inkjet device;
- specifying an e-mail address where to send the scan of the paper document.

In operation, the user device 5 sends a command to the reading and scanning device 3 with the syntax <command>, <URI> ("Uniform Resource Identifier"), where <command> can have the values POST, GET and SET, whereas <URI> indicates the device involved in the request.

Assuming for example that the reading and scanning device 3 responds at the address http://18.31.0.34, then the request sent through the HTTP protocol will be of the type <http://18.31.0.34/filename>, where "file_name" can take different values as will be specified below.

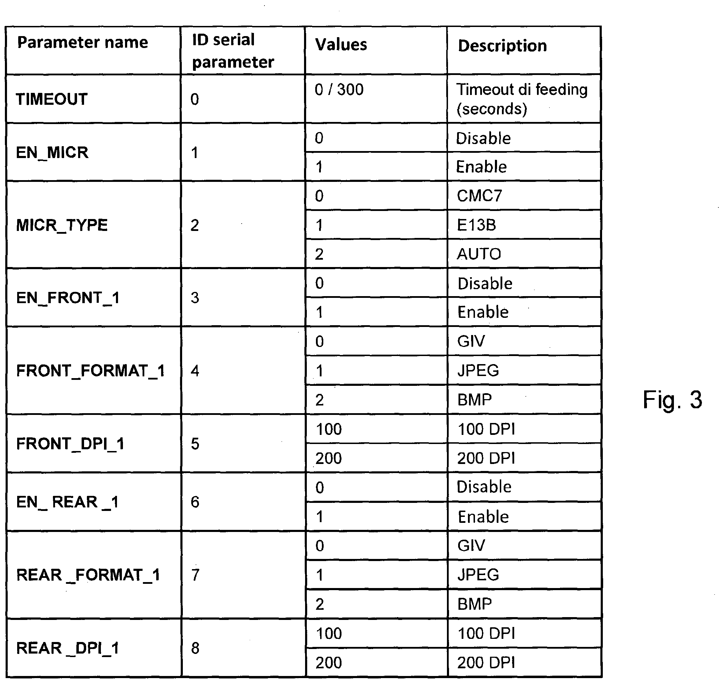

In order to configure the reading and scanning device 3, the user device 5 will use the request < POST http://18.31.0.34/config>. The request body will contain a plurality of parameters and the values thereof, as shown by way of example in the table of Fig. 3. Such parameters include power time-out (TIMEOUT), enabling the reading of the MICR code (EN_MICR) and type thereof (MICR-TYPE), enabling the scanning of the front image of the document (EN_FRONT_1) and format (FRONT_FORMAT_1) and resolution (FRONT_DPI_1) thereof, and similar parameters for the back side of the document (EN_REAR_1, REAR_FORMAT_1, REAR_DPI_1).

In order to operate the scanning means of the reading and scanning device 3, the user device 5 will use the request < POST http://18.31.0.34/scan>. When the scan is complete, the reading and scanning device 3 will transmit a reply to the POST message, thereby indicating that the scanning procedure has been carried out with no errors (code 302).

In order to obtain the scan result, the user device 5 will then use the request < GET http://18.31.0.34/result>.

Instead of scanning the front and back sides of the paper document, it is possible to scan either the front side or the back side only, for example by using the respective commands < GET http://18.31.0.34/front_image> and < GET http://18.31.0.34/rear_ image>.

In order to obtain the result of the reading of an optical or magnetic code, the user device 5 will use the request < GET http://18.31.0.34/micr.txt>.

At each request, the reading and scanning device 3 will reply with a specific code of the HTTP protocol: 200 to indicate that the reading and scanning device 3 has correctly supplied the request content; 302 to indicate that the resource is available at another URI address; 404 to indicate that an error has occurred.

Instead of using the HTTP protocol, it is possible to implement the above-mentioned operations through a serial protocol.

The images obtained by scanning the paper document can be returned compressed in the known formats JPG and G4.

As aforesaid, the central processing unit 4 comprises a port 14 for a USB connector, which can be configured to operate as either a "device" or a "host".

When it is configured as a "device", the reading and scanning device 3 can be connected to the user device 5 through a standard USB cable. In this configuration, the reading and scanning device 3 operates in slave mode, since it is essentially driven by the user device 5, which will start and manage the transactions by using the HTTP protocol and the commands described above.

When it is configured as a "host", the reading and scanning device 3 can power and control an electronic key, or dongle, which is typically a WiFi dongle but may also be a Bluetooth or LAN one.

Of course, the "host" and "device" behaviours cannot coexist, but the reading and scanning device 3 can be designed to accept both a USB cable and a WiFi dongle, and mode switching can be done either manually by setting suitable parameters or automatically by "sensing" the presence of the 5V voltage generated by the USB. In fact, the operating system loaded in the card of the reading and scanning device 3 can automatically detect, during the boot stage, if the reading and scanning device 3 is being used as a "device" or a "host", detecting either the presence of a 5V supply at the internal USB port ("device" behaviour) or the absence of said supply ("host" behaviour). The switching between the two modes can be obtained by monitoring the presence of 5V voltage in real time and forcing an automatic reboot to set the system into the new mode.

The reading and scanning device 3 can be powered by a direct-current supply, or by 110-260 V mains alternating voltage through a suitable switching power supply. This type of supply can support both the "device" mode and the "host" mode.

As an alternative, the reading and scanning device 3 may be powered by a direct voltage source, e.g. like the one available in a motor vehicle, thus also ensuring mobile connectivity. In this case, the reading and scanning device 3 is powered through a direct-current power supply capable of accepting the DC input (12/24 V) from a motor vehicle and of adapting its own output to the voltage and current conditions required for powering the reading and scanning device 3.

As a further alternative, the reading and scanning device 3 may be equipped with lithium-ion-polymer (LiPo) batteries or the like to be able to operate in wireless mode in the "host" configuration, for example, but without limitation whatsoever, through a WiFi dongle. The connection of the reading and scanning device 3 to an external energy source (or to the DC-DC adapter) will supply power to the reading and scanning device 3 while at the same time recharging said batteries.

The possibility of operating the device in "host" mode or in "device" mode allows the user to use the reading and scanning device 3 in different scenarios, four of which will now be described by way of example.

### Scenario 1

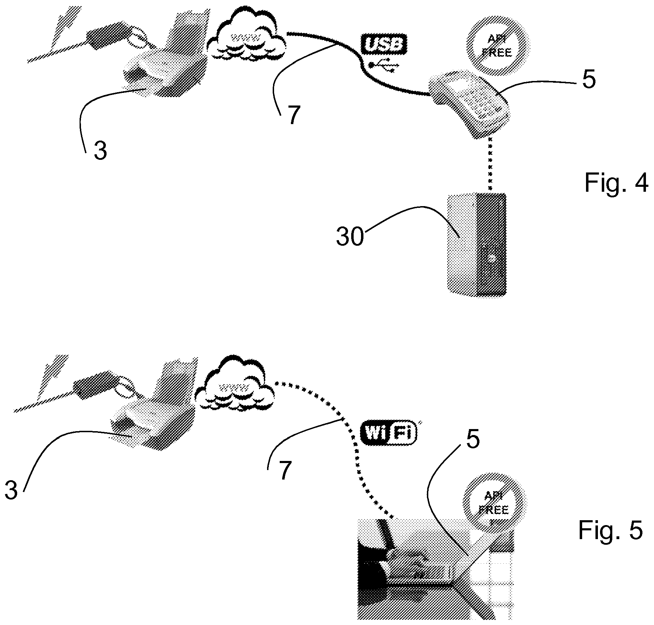

With reference to Fig. 4, there is shown a first scenario wherein the user device 5 consists of a POS terminal connected to the reading and scanning device 3 through a USB cable. The POS terminal is then connected to a remote server 30 of a bank, a post office or the like. The reading and scanning device 3 is powered by the electric mains. The paper document containing information adapted to generate a commercial transaction is read by the reading and scanning device 3, which stores into its temporary memory, managed by the digital signal processor 6, at least one image of the document (if it is a cheque, it will store both the front image and the back image), and possibly also other supplementary information read by the magnetic/optical reading means, e.g. the MICR code in the case of a cheque.

At least one image and any supplementary information are temporarily stored into the reading and scanning device 3 and are accessible from the POS terminal 5 via the HTTP protocol. Also the configuration of the reading and scanning device 3, containing parameters relating to the images to be captured, the light source, the resolution, the type of MICR codeline, the default mailbox, the codelines and the stamping, can be modified through the POS terminal via the HTTP protocol.

It can therefore be appreciated that no type of API ("Application Program Interface") or library needs to be installed into the POS terminal, so that any POS terminal can trigger a commercial transaction by starting from a paper document, just like a similar transaction would now be carried out through a credit card.

Some typical applications of the first scenario may include:
- making a payment through cheque with real-time cheque guarantee service;
- depositing a cheque remotely or at a point of purchase;
- paying invoices, bills, luncheon vouchers and the like.

### Scenario 2

With reference to Fig. 5, there is shown a second scenario wherein the user device 5 consists of a computer connected to the reading and scanning device 3 through a WiFi connection. The reading and scanning device 3 is powered by the electric mains. The paper document containing information adapted to generate a commercial transaction is read by the reading and scanning device 3, which stores into its temporary memory, managed by the digital signal processor 6, at least one image of the document (if it is a cheque, it will store both the front image and the back image), and possibly also other supplementary information read by the magnetic/optical reading means, e.g. the MICR code in the case of a cheque.

At least one image and any supplementary information are temporarily stored into the reading and scanning device 3 and are accessible and possibly modifiable from the computer 5 via the HTTP protocol.

It can therefore be appreciated that no API ("Application Program Interface") needs to be installed in the computer, and therefore any computer equipped with a WiFi connection can trigger a commercial transaction by starting from a paper document supplied to the reading and scanning device 3.

Some typical applications of the second scenario may include:
- real-time acceptance of a cheque (reading and scanning device 3 in reception) and remote connection through a user device 5 from a professional firm at the end of the day for further treatment of the cheque data.

### Scenario 3

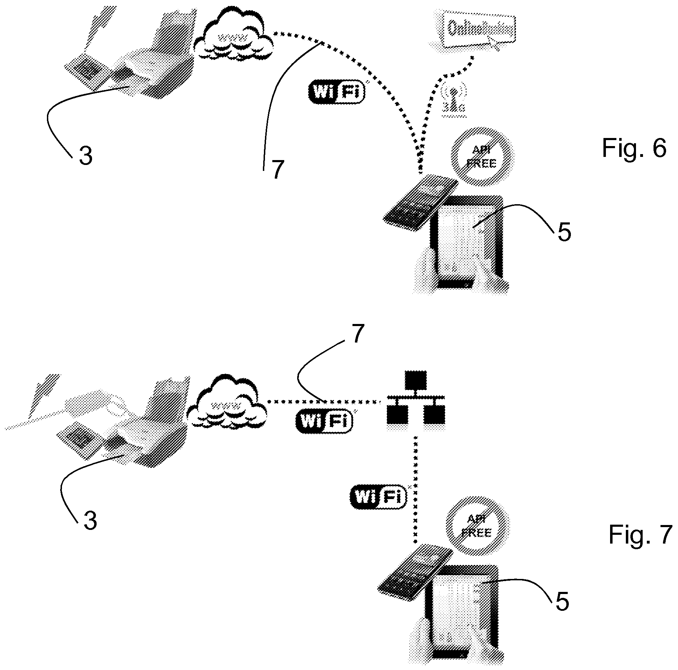

With reference to Fig. 6, there is shown a third scenario wherein the user device 5 consists of a smartphone, a tablet or a mobile telephone connected to the reading and scanning device 3 through a WiFi connection. This scenario is particularly suited to a situation of total mobility.

The reading and scanning device 3 is powered by rechargeable batteries or, through an adapter, by a direct current source, e.g. the 12V socket of a car. The paper document containing information adapted to generate a commercial transaction is read by the reading and scanning device 3, which stores into its temporary memory, managed by the digital signal processor 6, at least one image of the document (if it is a cheque, it will store both the front image and the back image), and possibly also other supplementary information read by the magnetic/optical reading means, e.g. the MICR code in the case of a cheque.

At least one image and any supplementary information are temporarily stored into the reading and scanning device 3 and are accessible from the tablet, smartphone or mobile telephone via the HTTP protocol. The tablet, smartphone or mobile telephone is then connected, through a data communication network other than the WiFi communication network, e.g. a 3G network, to an online banking site.

It can therefore be appreciated that no API ("Application Program Interface") needs to be installed in the tablet, smartphone or mobile telephone, and therefore any tablet, smartphone or mobile telephone equipped with a WiFi connection can trigger a commercial transaction by starting from a paper document supplied to the reading and scanning device 3.

Some typical applications of the third scenario may include:
- remote connection from a mobile device;
- multilevel marketing initiatives, e.g. Tupperware parties, wherein cheques are collected from different customers on an occasional basis.

### Scenario 4

With reference to Fig. 7, there is shown a fourth scenario wherein the user device 5 consists of a smartphone, a tablet or a mobile telephone connected, through a WiFi connection, to a LAN ("Local Area Network"), and the same network is also made to include, by setting suitable masks and gateways, the reading and scanning device 3. The reading and scanning device 3 is powered by rechargeable batteries or, through an adapter, by a direct current source, e.g. the 12V socket of a car. The paper document containing information adapted to generate a commercial transaction is read by the reading and scanning device 3, which stores into its temporary memory, managed by the digital signal processor 6, at least one image of the document (if it is a cheque, it will store both the front image and the back image), and possibly also other supplementary information read by the magnetic/optical reading means, e.g. the MICR code in the case of a cheque.

At least one image and any supplementary information are temporarily stored into the reading and scanning device 3 and are accessible from the tablet, smartphone or mobile telephone via the HTTP protocol.

It can therefore be appreciated that no API ("Application Program Interface") needs to be installed in the tablet, smartphone or mobile telephone, and therefore any tablet, smartphone or mobile telephone equipped with a WiFi connection can trigger a commercial transaction by starting from a paper document supplied to the reading and scanning device 3.

Some typical applications of the fourth scenario may include:
- depositing cheques, paying invoices, digitalizing documents with high spatial flexibility, there being no wired connections because the reading and scanning device 3 is powered by a self-contained battery and the connection to the remaining system components is established in wireless mode.

The features of the present invention, as well as the advantages thereof, are apparent from the above description.

A first advantage of the device, system and method for making commercial transactions through a paper document according to the present invention is that any user device, in particular a POS terminal, a computer, a tablet, a smartphone, or a mobile telephone, can operate a reading device remotely because no specific application, in particular no API ("Application Program Interface"), is required.

A second advantage of the device, system and method according to the present invention is that it is possible to make a commercial transaction by using a paper document, in particular a cheque, a voucher, a luncheon voucher, an invoice and the like.

A further advantage of the device and method according to the present invention is that said commercial transaction can be made in mobility.

The device, system and method for making commercial transactions through a paper document described herein by way of example may be subject to many possible variations without departing from the novelty spirit of the inventive idea; it is also clear that in the practical implementation of the invention the illustrated details may have different shapes or be replaced with other technically equivalent elements.

It can therefore be easily understood that the present invention is not limited to a device, a system and a method for making commercial transactions through a paper document, but may be subject to many modifications, improvements or replacements of equivalent parts and elements without departing from the inventive idea, as clearly specified in the following claims.

## Claims

1. A system for making commercial transactions through a cheque, said system comprising:
- a device (3) for reading and scanning said cheque in order to get information useful for a commercial transaction, said device (3) for reading and scanning said cheque comprising means (9) for reading and scanning a front and a back image of said cheque, means (10) for reading and scanning an optical or magnetic code of said cheque, said information comprising said front image, said back image and said optical or magnetic code of said cheque,
said device (3) for reading and scanning said cheque having an IP address;
- a user device (5) configured to conduct said commercial transaction using said information;
- interface means (7), in particular a connection, between said device (3) for reading and scanning said cheque (3) and said user device (5),
wherein:
- said device (3) for reading and scanning said cheque comprises a software interface adapted to exchange data and/or said information with said user device (5) through said interface means (7) and via an HTTP or HTTPS protocol, and an internal web server including an internal web site comprising a sequence of web pages;- said interface means (7) are configured to transmit said internal web site to said user device (5);
- said user device (5) comprises a web browser or a specific application pointing to said IP address of said device (3) for reading and scanning said cheque and means for reproducing on said web browser or said specific application said sequence of web pages adapted to control the functions of said device (3) for reading and scanning said cheque through said interface means (7) and said HTTP or HTTPS protocol,
wherein the functions of said device (3) for reading and scanning said cheque comprise:
- configuring said device (3) for reading and scanning said cheque;
- scanning said front image, said back image and said optical or magnetic code of said cheque to obtain said information ;
- reading an optical and/or magnetic code of said cheque;
- commanding a printing operation to be executed by a stamp or inkjet device of said device (3) for reading and scanning said cheque;
- specifying an e-mail address where to send said information.

2. A system according to claim 1, wherein said device (3) for reading and scanning said cheque comprises a cheque sorter.

3. A system according to claim 1, wherein said interface means (7) operate in wired or wireless mode.

4. A system according to claim 1, wherein said user device (5) comprises one of the following devices: smartphone; mobile telephone; computer; POS terminal; tablet.

5. A system according to claim 1, wherein said device (3) for reading and scanning said cheque comprises a port (14) for a USB connector, which allows the device (3) for reading and scanning said cheque to operate in device mode or in host mode.

6. A system according to claim 5, wherein said device (3) for reading and scanning said cheque comprises power supply means adapted to power a dongle, in particular of the WiFi, Bluetooth or LAN type, when said device (3) is powered as a host.

7. A system according to claim 5, wherein said device (3) for reading and scanning said cheque is able to automatically switch between the device and host modes.

8. A system according to one or more of the preceding claims, wherein said user device (5) is adapted to transmit said data and/or said information through a communication network, or through a second connection other than said connection, to a computer of a bank, a post office or the like.

9. A method for making commercial transactions through a cheque, the method comprising the steps of:
- reading and scanning said cheque by means of a device (3) for reading and scanning said cheque in order to get information useful for a commercial transaction, said information comprising a front image, a back image and an optical or magnetic code of said cheque, said device (3) for reading and scanning said cheque having an Internet Protocol or IP address, said device (3) for reading and scanning said cheque further comprising an internal web server including an internal web site comprising a sequence of web pages;
- configuring a user device (5) to conduct said commercial transaction using said information, said user device (5) comprising a web browser or a specific application pointing to said IP address of said device (3) for reading and scanning said cheque;
- interfacing through interface means (7), in particular a connection, said device (3) for reading and scanning said cheque and said user device (5);
- exchanging data and/or said information with said user device (5) through said interface means (7) and via an HTTP or HTTPS protocol by means of a software interface of said device (3) for reading and scanning said cheque;
- transmitting said internal web site to said user device (5) through said interface means (7);
- reproducing on said web browser or said specific application said sequence of web pages adapted to control the functions of said device (3) for reading and scanning said cheque through said interface means (7) and said HTTP or HTTPS protocol,
wherein the functions of said device (3) for reading and scanning said cheque comprise:
- configuring said device (3) for reading and scanning said cheque;
- scanning said front image, said back image and said optical or magnetic code of said cheque to obtain said information ;
- reading an optical and/or magnetic code of said cheque;
- commanding a printing operation to be executed by a stamp or inkjet device of said device (3) for reading and scanning said cheque;
- specifying an e-mail address where to send said information.

10. A method according to claim 9, wherein said browser or specific application is adapted to control said device (3) for reading and scanning said cheque in a manner such that the user device (5) sees said device (3) for reading and scanning said cheque as a Web site.

11. A device (3) for reading and scanning a cheque comprising:
- means (9) for reading and scanning a front and a back image of said cheque and means (10) for reading and scanning an optical or magnetic code of said cheque, wherein said front image, said back image and said optical or magnetic code of said cheque constitute information useful for a commercial transaction;
- a device (3) for reading and scanning said paper document containing information useful for a commercial transaction, said reading and scanning device (3) having an IP address;
- interface means (7), in particular a connection, for interfacing to a user device (5); **characterized in that** said device (3) for reading and scanning said cheque comprises a software interface adapted to exchange data and/or said information with said user device (5) through said interface means (7) and via the HTTP or HTTPS protocol and an internal web server including an internal web site comprising a sequence of web pages;
said interface means (7) are configured to transmit said internal web site to said user device (5) and to receive commands from said user device (5) adapted to control the functions of said device (3) for reading and scanning said cheque,
wherein the functions of said device (3) for reading and scanning said cheque comprise:
- configuring said device (3) for reading and scanning said cheque;
- scanning said front image, said back image and said optical or magnetic code of said cheque to obtain said information ;
- reading an optical and/or magnetic code of said cheque;
- commanding a printing operation to be executed by a stamp or inkjet device of said device (3) for reading and scanning said cheque;
- specifying an e-mail address where to send said information.

12. A device according to claim 11, wherein said interface means (7) are of the wireless type.

13. A device according to claim 11, wherein said interface means (7) comprise a port (14) for a USB connector.

14. A device according to claim 13, wherein said port (14) for said USB connector are configured in device mode or in host mode.

15. A device according to claim 14, wherein said device (3) for reading and scanning said cheque is able to automatically switch between said device mode and said host mode.

16. A device according to claim 11, wherein said device (3) for reading and scanning said cheque are powered by a direct voltage source external to said device.

17. A device according to claim 11, wherein said device (3) for reading and scanning said cheque is powered by batteries, in particular of the lithium-ion-polymer type.

## Patentansprüche

1. System zum Durchführen von Geschäftsvorgängen durch einen Scheck, wobei das System umfasst:
- eine Vorrichtung (3) zum Lesen und Scannen des Schecks, um Informationen zu erhalten, die für eine geschäftliche Transaktion verwendbar sind, wobei die Vorrichtung (3) zum Lesen und Scannen des Schecks Mittel (9) zum Lesen und Scannen eines Vorder- und eines Rückseitenbildes des Schecks und Mittel (10) zum Lesen und Scannen eines optischen oder magnetischen Codes des Schecks aufweist, wobei die Informationen das Vorderseitenbild, das Rückseitenbild und den optischen oder magnetischen Code des Schecks umfassen,
wobei die Vorrichtung (3) zum Lesen und Scannen des Schecks eine IP-Adresse hat;
- eine Benutzervorrichtung (5), die eingerichtet ist, dass sie den Geschäftsvorgang unter Verwendung der Informationen durchführt;
- Schnittstellenmittel (7), insbesondere eine Verbindung, zwischen der Vorrichtung (3) zum Lesen und Scannen des Schecks (3) und der Benutzervorrichtung (5),
wobei:
- die Vorrichtung (3) zum Lesen und Scannen des Schecks eine Softwareschnittstelle umfasst, die eingerichtet ist, Daten und/oder die Informationen mit der Benutzervorrichtung (5) durch die Schnittstellenmittel (7) und über ein HTTP- oder HTTPS-Protokoll auszutauschen, und einen internen Webserver aufweist, der eine interne Webseite umfasst, die eine Folge von Webseiten umfasst; - die Schnittstellenmittel (7) eingerichtet sind, dass sie die interne Webseite an die Benutzervorrichtung (5) übertragen;
- die Benutzervorrichtung (5) einen Webbrowser oder eine spezifische Anwendung umfasst, die auf die IP-Adresse der Vorrichtung (3) zeigt, um den Scheck zu lesen und zu scannen, und Mittel zum Reproduzieren der Sequenz von Webseiten auf dem Webbrowser oder der spezifischen Anwendung, die eingerichtet sind, die Funktionen der Vorrichtung (3) zum Lesen und Scannen des Schecks durch die Schnittstellenmittel (7) und das HTTP- oder HTTPS-Protokoll zu steuern,
wobei die Funktionen der Vorrichtung (3) zum Lesen und Scannen des Schecks umfassen:
- Konfigurieren der Vorrichtung (3) zum Lesen und Scannen des Schecks;
- Scannen des Vorderseitenbilds, des Rückseitenbilds und des optischen oder magnetischen Codes des Schecks, um die Informationen zu erhalten;
- Lesen eines optischen und/oder magnetischen Codes des Schecks;
- Befehlen eines Druckvorgangs, der von einer Stempel- oder Tintenstrahlvorrichtung der Vorrichtung zum Lesen und Scannen des Schecks ausgeführt werden soll;
- Angeben einer E-Mailadresse, an die die Informationen gesendet werden sollen.

2. System nach Anspruch 1, wobei die Vorrichtung (3) zum Lesen und Scannen des Schecks einen Schecksortierer umfasst.

3. System nach Anspruch 1, wobei die Schnittstellenmittel (7) in einem drahtgebundenen oder drahtlosen Modus arbeiten.

4. System nach Anspruch 1, wobei die Benutzervorrichtung (5) eine der folgenden Vorrichtungen umfasst: Smartphone; Mobiltelefon; Computer; POS-Terminal; Tablet.

5. System nach Anspruch 1, wobei die Vorrichtung (3) zum Lesen und Scannen des Schecks einen Anschluss (14) für einen USB-Verbinder aufweist, der es der Vorrichtung (3) zum Lesen und Scannen des Schecks ermöglicht, im Gerätemodus oder im Hostmodus zu arbeiten.

6. System nach Anspruch 5, wobei die Vorrichtung (3) zum Lesen und Scannen des Schecks Energieversorgungsmittel aufweist, die eingerichtet sind, einen Dongle, insbesondere vom Typ Wi-Fi, Bluetooth oder LAN, mit Energie zu versorgen, wenn die Vorrichtung (3) als Host betrieben wird.

7. System nach Anspruch 5, wobei die Vorrichtung (3) zum Lesen und Scannen des Schecks eingerichtet ist, automatisch zwischen dem Geräte- und Hostmodus umzuschalten.

8. System nach einem oder mehreren der vorhergehenden Ansprüche, wobei die Benutzervorrichtung (5) eingerichtet ist, um die Daten und/oder Informationen über ein Kommunikationsnetzwerk oder durch eine zweite Verbindung, die eine andere als die Verbindung ist, an einen Computer einer Bank oder einer Poststelle oder dergleichen zu übertragen.

9. Verfahren zum Durchführen von Geschäftsvorgängen durch einen Scheck, wobei das Verfahren die Schritte umfasst:
- Lesen und Scannen des Schecks durch Mittel einer Vorrichtung (3) zum Lesen und Scannen des Schecks, um Informationen zu erhalten, die für eine geschäftliche Transaktion verwendbar sind, wobei die Informationen ein Vorderseitenbild, ein Rückseitenbild und einen optischen oder magnetischen Code des Schecks umfassen, wobei die Vorrichtung (3) zum Lesen und Scannen des Schecks eine Internetprotokoll- oder IP-Adresse hat, wobei die Vorrichtung (3) zum Lesen und Scannen des Schecks ferner einen internen Webserver aufweist, der eine interne Webseite umfasst, die eine Folge von Webseiten umfasst;
- Konfigurieren der Benutzervorrichtung (5) zum Durchführen des Geschäftsvorgang unter Verwendung der Informationen, wobei die Benutzervorrichtung (5) einen Webbrowser oder eine spezifische Anwendung umfasst, die auf die IP-Adresse der Vorrichtung (3) zeigt, um den Scheck zu lesen und zu scannen;
- Verbinden durch Schnittstellenmittel (7), insbesondere eine Verbindung, zwischen der Vorrichtung (3) zum Lesen und Scannen des Schecks (3) und der Benutzervorrichtung (5),
- Austauschen von Daten und/oder den Informationen mit der Benutzervorrichtung (5) durch die Schnittstellenmittel (7) und über ein HTTP- oder HTTPS-Protokoll durch Mittel einer Softwareschnittstelle der Vorrichtung (3) zum Lesen und Scannen des Schecks;
- Übertragen der internen Webseite an die Benutzervorrichtung (5) durch die Schnittstellenmittel (7);
- Reproduzieren auf dem Webbrowser oder der spezifischen Anwendung, die Folge von Webseiten, die eingerichtet ist, um Funktionen der Vorrichtung (3) zum Lesen und Scannen des Schecks durch die Schnittstellenmittel (7) und das HTTP- oder HTTPS-Protokoll zu steuern,
wobei die Funktionen der Vorrichtung (3) zum Lesen und Scannen des Schecks umfassen:
- Konfigurieren der Vorrichtung (3) zum Lesen und Scannen des Schecks;
- Scannen des Vorderseitenbilds, des Rückseitenbilds und des optischen oder magnetischen Codes des Schecks, um die Informationen zu erhalten;
- Lesen eines optischen und/oder magnetischen Codes des Schecks;
- Befehlen eines Druckvorgangs, der von einer Stempel- oder Tintenstrahlvorrichtung der Vorrichtung zum Lesen und Scannen des Schecks ausgeführt werden soll;
- Angeben einer E-Mailadresse, an die die Informationen gesendet werden sollen.

10. Verfahren nach Anspruch 9, wobei der Browser oder die spezifische Anwendung eingerichtet ist, die Vorrichtung (3) zum Lesen und Scannen des Schecks in einer Weise zu steuern, sodass die Benutzervorrichtung (5) die Vorrichtung (3) zum Lesen und Scannen des Schecks als Webseite sieht.

11. Vorrichtung (3) zum Lesen und Scannen eines Schecks, umfassend:
- Mittel (9) zum Lesen und Scannen eines Vorderseiten- und eines Rückseitenbildes des Schecks und Mittel (10) zum Lesen und Scannen eines optischen oder magnetischen Codes des Schecks, wobei das Vorderseitenbild, das Rückseitenbild und der optische oder magnetische Code des Schecks Informationen bilden, die für Geschäftsvorgänge verwendbar sind;
- eine Vorrichtung (3) zum Lesen und Scannen des Papierdokuments, das Informationen, die verwendbar für einen Geschäftsvorgang sind, enthält, wobei die Lese- und Scanvorrichtung (3) eine IP-Adresse hat;
- Schnittstellenmittel (7), insbesondere eine Verbindung, zum Verbinden mit einer Benutzervorrichtung (5);
**dadurch gekennzeichnet, dass** die Vorrichtung (3) zum Lesen und Scannen des Schecks eine Softwareschnittstelle umfasst, die eingerichtet ist, Daten und/oder die Informationen mit der Benutzervorrichtung (5) durch die Schnittstellenmittel (7) und über das HTTP- oder HTTPS-Protokoll und einen internen Webserver, der eine interne Webseite umfasst, die eine Folge von Webseiten aufweist, auszutauschen;
wobei die Schnittstellenmittel (7) eingerichtet sind, die interne Webseite an die Benutzervorrichtung (5) zu übertragen und Kommandos von der Benutzervorrichtung (5) zu empfangen, die eingerichtet sind, die Funktionen der Vorrichtung (3) zum Lesen und Scannen des Schecks zu steuern,
wobei die Funktionen der Vorrichtung (3) zum Lesen und Scannen des Schecks umfassen:
- Konfigurieren der Vorrichtung (3) zum Lesen und Scannen des Schecks;
- Scannen des Vorderseitenbilds, des Rückseitenbilds und des optischen oder magnetischen Codes des Schecks, um die Informationen zu erhalten;
- Lesen eines optischen und/oder magnetischen Codes des Schecks;
- Befehlen eines Druckvorgangs, der von einer Stempel- oder Tintenstrahlvorrichtung der Vorrichtung zum Lesen und Scannen des Schecks ausgeführt werden soll;
- Angeben einer E-Mailadresse, an die die Informationen gesendet werden sollen.

12. Vorrichtung nach Anspruch 11, wobei die Schnittstellenmittel (7) vom drahtlosen Typ sind.

13. Vorrichtung nach Anspruch 11, wobei die Schnittstellenmittel (7) einen Anschluss (14) für einen USB-Verbinder aufweisen.

14. Vorrichtung nach Anspruch 13, wobei der Anschluss (14) für den USB-Verbinder für einen Gerätemodus oder einen Hostmodus konfiguriert ist.

15. Vorrichtung nach Anspruch 14, wobei die Vorrichtung (3) zum Lesen und Scannen des Schecks eingerichtet ist, automatisch zwischen dem Gerätemodus und dem Hostmodus umzuschalten.

16. Vorrichtung nach Anspruch 11, wobei die Vorrichtung (3) zum Lesen und Scannen des Schecks durch eine Gleichspannungsquelle extern der Vorrichtung mit Energie versorgt wird.

17. Vorrichtung nach Anspruch 11, wobei die Vorrichtung (3) zum Lesen und Scannen des Schecks durch Batterien versorgt wird, insbesondere vom Lithium-Ion-Polymer-Typ.

## Revendications

1. Système pour réaliser des transactions commerciales par chèque, ledit système comprenant :
- un dispositif (3) de lecture et de balayage dudit chèque afin d'obtenir des informations utiles pour une transaction commerciale, ledit dispositif (3) de lecture et de balayage dudit chèque comprenant un moyen (9) de lecture et de balayage d'une image avant et arrière dudit chèque, un moyen (10) de lecture et de balayage d'un code optique ou magnétique dudit chèque, lesdites informations comprenant ladite image avant, ladite image arrière et ledit code optique ou magnétique dudit chèque,
ledit dispositif (3) de lecture et de balayage dudit chèque ayant une adresse IP ;
- un dispositif utilisateur (5) configuré pour mener ladite transaction commerciale à l'aide desdites informations ;
- des moyens d'interface (7), en particulier une connexion, entre ledit dispositif (3) de lecture et de balayage dudit chèque (3) et ledit dispositif utilisateur (5),
dans lequel :
- ledit dispositif (3) de lecture et de balayage dudit chèque comprend une interface logicielle adaptée pour échanger des données et/ou lesdites informations avec ledit dispositif utilisateur (5) par l'intermédiaire desdits moyens d'interface (7) et via un protocole HTTP ou HTTPS, et un serveur web interne comportant un site web interne comprenant une séquence de pages web ; lesdits moyens d'interface (7) sont configurés pour transmettre ledit site web interne audit dispositif utilisateur (5) ;
- ledit dispositif utilisateur (5) comprend un navigateur web ou une application spécifique indiquant ladite adresse IP dudit dispositif (3) de lecture et de balayage dudit chèque et un moyen de reproduction sur ledit navigateur web ou ladite application spécifique de ladite séquence de pages web adapté pour commander les fonctions dudit dispositif (3) de lecture et de balayage dudit chèque par l'intermédiaire desdits moyens d'interface (7) et dudit protocole HTTP ou HTTPS,
dans lequel les fonctions dudit dispositif (3) de lecture et de balayage dudit chèque comprennent :
- la configuration dudit dispositif (3) de lecture et de balayage dudit chèque ;
- le balayage de ladite image avant, de ladite image arrière ou dudit code optique ou magnétique dudit chèque pour obtenir lesdites informations ;
- la lecture d'un code optique et/ou magnétique dudit chèque ;
- l'ordre d'une opération d'impression à exécuter par un dispositif à jet d'encre ou d'estampille dudit dispositif (3) de lecture et de balayage dudit chèque ;
- la spécification d'une adresse électronique où envoyer lesdites informations.

2. Système selon la revendication 1, dans lequel ledit dispositif (3) de lecture et de balayage dudit chèque comprend une trieuse de chèque.

3. Système selon la revendication 1, dans lequel lesdits moyens d'interface (7) fonctionnent en mode filaire ou sans fil.

4. Système selon la revendication 1, dans lequel ledit dispositif utilisateur (5) comprend l'un des dispositifs suivants : un téléphone intelligent ; un téléphone mobile ; un ordinateur ; un terminal de point de vente ; une tablette.

5. Système selon la revendication 1, dans lequel ledit dispositif (3) de lecture et de balayage dudit chèque comprend un port (14) pour un connecteur USB, qui permet au dispositif (3) de lecture et de balayage dudit chèque de fonctionner en mode dispositif ou en mode hôte.

6. Système selon la revendication 5, dans lequel ledit dispositif (3) de lecture et de balayage dudit chèque comprend un moyen d'alimentation électrique adapté pour alimenter une clé électronique, en particulier du type WiFi, Bluetooth ou LAN, lorsque ledit dispositif (3) est alimenté en tant qu'hôte.

7. Système selon la revendication 5, dans lequel le dispositif (3) de lecture et de balayage dudit chèque est capable de commuter automatiquement entre les modes dispositif et hôte.

8. Système selon une ou plusieurs des revendications précédentes, dans lequel ledit dispositif utilisateur (5) est adapté pour transmettre lesdites données et/ou lesdites informations par l'intermédiaire d'un réseau de communication, ou par l'intermédiaire d'une seconde connexion autre que ladite connexion, à un ordinateur d'une banque, d'un bureau de poste ou similaire.

9. Procédé pour réaliser des transactions commerciales par chèque, le procédé comprenant les étapes de :
- lecture et balayage dudit chèque au moyen d'un dispositif (3) de lecture et de balayage dudit chèque afin d'obtenir des informations utiles pour une transaction commerciale, lesdites informations comprenant une image avant, une image arrière et un code optique ou magnétique dudit chèque, ledit dispositif (3) de lecture et de balayage dudit chèque ayant une adresse de protocole Internet ou IP, ledit dispositif (3) de lecture et de balayage dudit chèque comprenant en outre un serveur web interne comportant un site web interne comprenant une séquence de pages web ;
- configuration d'un dispositif utilisateur (5) pour mener ladite transaction commerciale à l'aide desdites informations, ledit dispositif utilisateur (5) comprenant un navigateur web ou une application spécifique indiquant ladite adresse IP dudit dispositif (3) de lecture et de balayage dudit chèque ;
- interfaçage par l'intermédiaire des moyens d'interface (7), en particulier d'une connexion, dudit dispositif (3) de lecture et de balayage dudit chèque et dudit dispositif utilisateur (5) ;
- échange de données et/ou desdites informations avec ledit dispositif utilisateur (5) par l'intermédiaire desdits moyens d'interface (7) et via un protocole HTTP ou HTTPS par le biais d'une interface logicielle dudit dispositif (3) de lecture et de balayage dudit chèque ;
- transmission dudit site web interne audit dispositif utilisateur (5) par l'intermédiaire desdits moyens d'interface (7) ;
- reproduction sur ledit navigateur web ou ladite application spécifique de ladite séquence de pages web adaptée pour commander les fonctions dudit dispositif (3) de lecture et de balayage dudit chèque par l'intermédiaire desdits moyens d'interface (7) et dudit protocole HTTP ou HTTPS,
dans lequel les fonctions dudit dispositif (3) de lecture et de balayage dudit chèque comprennent :
- la configuration dudit dispositif (3) de lecture et de balayage dudit chèque ;
- le balayage de ladite image avant, de ladite image arrière et dudit code optique ou magnétique dudit chèque pour obtenir lesdites informations ;
- la lecture d'un code optique et/ou magnétique dudit chèque ;
- l'ordre d'une opération d'impression à exécuter par un dispositif à jet d'encre ou d'estampille dudit dispositif (3) de lecture et de balayage dudit chèque ;
- la spécification d'une adresse électronique où envoyer lesdites informations.

10. Procédé selon la revendication 9, dans lequel ledit navigateur ou ladite application spécifique est adapté(e) pour commander ledit dispositif (3) de lecture et de balayage dudit chèque de manière à ce que le dispositif utilisateur (5) voie ledit dispositif (3) de lecture et de balayage dudit chèque en tant que site web.

11. Dispositif (3) de lecture et de balayage d'un chèque comprenant :
- un moyen (9) de lecture et de balayage d'une image avant et arrière dudit chèque et un moyen (10) de lecture et de balayage d'un code optique ou magnétique dudit chèque, dans lequel ladite image avant, ladite image arrière et ledit code optique ou magnétique dudit chèque constituent des informations utiles pour une transaction commerciale ;
- un dispositif (3) de lecture et de balayage dudit document papier contenant des informations utiles pour une transaction commerciale, ledit dispositif de lecture et de balayage (3) ayant une adresse IP ;
- des moyens d'interface (7), en particulier une connexion, pour interfacer avec un dispositif utilisateur (5) ;
**caractérisé en ce que** ledit dispositif (3) de lecture et de balayage dudit chèque comprend une interface logicielle adaptée pour échanger des données et/ou lesdites informations avec ledit dispositif utilisateur (5) par l'intermédiaire desdits moyens d'interface (7) et via le protocole HTTP ou HTTPS et un serveur web interne comportant un site web interne comprenant une séquence de pages web ;
lesdits moyens d'interface (7) sont configurés pour transmettre ledit site web interne audit dispositif utilisateur (5) et pour recevoir des ordres en provenance dudit dispositif utilisateur (5) adapté pour commander les fonctions dudit dispositif (3) de lecture et de balayage dudit chèque,
dans lequel les fonctions dudit dispositif (3) de lecture et de balayage dudit chèque comprennent :
- la configuration dudit dispositif (3) de lecture et de balayage dudit chèque ;
- le balayage de ladite image avant, ladite image arrière et dudit code optique ou magnétique dudit chèque pour obtenir lesdites informations ;
- la lecture d'un code optique et/ou magnétique dudit chèque ;
- l'ordre d'une opération d'impression à exécuter par un dispositif à jet d'encre ou d'estampille dudit dispositif (3) de lecture et de balayage dudit chèque ;
- la spécification d'une adresse électronique où envoyer lesdites informations.

12. Dispositif selon la revendication 11, dans lequel lesdits moyens d'interface (7) sont du type sans fil.

13. Dispositif selon la revendication 11, dans lequel lesdits moyens d'interface (7) comprennent un port (14) pour un connecteur USB.

14. Dispositif selon la revendication 13, dans lequel ledit port (14) pour ledit connecteur USB est configuré en mode dispositif ou en mode hôte.

15. Dispositif selon la revendication 14, dans lequel ledit dispositif (3) de lecture et de balayage dudit chèque est capable de commuter automatiquement entre ledit mode dispositif et ledit mode hôte.

16. Dispositif selon la revendication 11, dans lequel ledit dispositif (3) de lecture et de balayage dudit chèque est alimenté par une source de tension continue externe audit dispositif.

17. Dispositif selon la revendication 11, dans lequel ledit dispositif (3) de lecture et de balayage dudit chèque est alimenté par des batteries, en particulier du type lithium-ion-polymère.
